# EUROPEAN PATENT SPECIFICATION

(11) **EP 3 952 480 B1**
(45) Date of publication and mention of the grant of the patent: **24.12.2025**
(21) Application number: 20798638.1
(22) Date of filing: 10.02.2020
(51) Int. Cl.: H04W 52/02

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 30.04.2019 CN 201910365311
(43) Date of publication of application: 09.02.2022
(73) Proprietor: Huawei Technologies Co., Ltd., Shenzhen, Guangdong 518129 (CN)
(72) Inventor: ZHENG, Lili, Shenzhen, Guangdong 518129 (CN); ZENG, Qinghai, Shenzhen, Guangdong 518129 (CN); ZHANG, Hongping, Shenzhen, Guangdong 518129 (CN); XU, Haibo, Shenzhen, Guangdong 518129 (CN); KUANG, Yiru, Shenzhen, Guangdong 518129 (CN)
(74) Representative: Gill Jennings & Every LLP
(86) International application number: PCT/CN2020/074652
(87) International publication number: WO 2020/220787

(56) References cited:
- EP-A1- 3 171 528
- EP-A1- 3 412 086
- EP-A1- 3 720 241
- EP-B1- 3 412 086
- WO-A1-2017/051502
- CN-A- 103 179 644
- CN-A- 104 105 177
- CN-A- 105 103 634
- CN-A- 108 702 732
- CN-A- 109 451 842
- US-A1- 2008 181 127
- QUALCOMM INCORPORATED: "Clean up and evaluation/conclusion on issues with one solution", 3GPP DRAFT; S2-151920, 29 May 2015 (2015-05-29), Fukuoka, Japan, pages 1 - 17, XP050979767
- ALCATEL-LUCENT SHANGHAI BELL; ALCATEL-LUCENT; ERICSSON; ST-ERICSSON: "Procedure for Extended Long DRX Determining", 3GPP DRAFT; S2-132832, 19 July 2013 (2013-07-19), Valencia, Spain, pages 1 - 4, XP050726205

## Description

### TECHNICAL FIELD

Embodiments of this application relate to the field of communication technologies, and in particular, to a communication method, and apparatus

### BACKGROUND

A network side may send a paging (Paging) message to a terminal device, to notify the terminal device to establish a connection to a network, or inform the terminal device of a system message change and information such as an earthquake and tsunami warning system (earthquake and tsunami warning system, ETWS) or a commercial mobile alert service (commercial mobile alert service, CMAS). The paging message is transmitted to the terminal device by using a physical downlink shared channel (physical downlink shared channel, PDSCH), and a time-frequency resource of the PDSCH is indicated by using a physical downlink control channel (physical downlink control channel, PDCCH) that is scrambled by using a P-RNTI. Therefore, the terminal device first needs to periodically wake up to monitor the PDCCH that is scrambled by using the P-RNTI, and obtain and parse downlink control information (Downlink Control Information, DCI), to further obtain the time-frequency resource of the PDSCH. Then, the terminal device parses the paging message on the corresponding time-frequency resource of the PDSCH. A cycle in which the terminal device wakes up to monitor the PDCCH that is scrambled by using the P-RNTI may be referred to as a paging (Paging) discontinuous reception (discontinuous reception, DRX) cycle.

When the terminal device is in an idle (idle) state, two cycles are configured for the terminal device, where the two cycles are a default paging cycle (default paging cycle) and a terminal device-specific cycle (UE specific cycle). When the terminal device is in an inactive (inactive) state, three cycles are configured for the terminal device, where the three cycles are a default paging cycle, a UE specific cycle configured at a non-access stratum (Non-access stratum, NAS), and a paging discontinuous reception cycle that is configured at a radio resource control (radio resource control, RRC) layer and that is used for radio access network (radio access network, RAN) paging. Regardless of whether the terminal device is in the idle state or the inactive state, the terminal device selects a shortest cycle as the paging DRX cycle. Consequently, the terminal device frequently wakes up to monitor the PDCCH. This does not facilitate power saving of the terminal device.
EP 3412086 A discloses methods of reliable paging transmission under extended discontinuous reception. US 2008/181127 A1 discloses a method for controlling discontinuous reception in a wireless transmit/receive unit including defining a plurality of DDRX levels, wherein each DRX level includes a respective DRX cycle length and transition between DRX levels based on a set of criteria. EP 3171528 A1 discloses Systems and methods for enhanced user equipment assistance information in wireless communication systems. CN 109451842 A discloses a method and device for saving power of User Equipment (UE), UE, and a base station, capable of configuring a reasonable DRX cycle for UE according to a request initiated by the UE or a service mode of the UE, thereby optimizing power saving performance. 'Qualcomm Incorporated: "Clean up and evaluation/conclusion on issues with one solution", 3GPP Draft; S2-151920, 29 May 2015' discloses solutions for idle mode DRX, connected mode DRX, and an overall evaluation for idle mode DRX. 'Alcatel-Lucent Shanghai Bell; Alcatel-Lucent; Ericsson; ST-Ericsson: "Procedure for Extended Long DRX Determining", 3GPP Draft; S2-132832, 19 July 2013' discloses a solution between the UE and network to determine if the extended long DRX can be supported or not and let the network know which UE needs extended long DRX for 7.1.3.1 Extended DRX in idle mode. The functionalities of related network elements with necessary signalling procedure are defined. CN 105103634 A discloses a wireless communication device having processing circuitry arranged to determine to use an extended paging discontinuous reception (DRX) value to increase a paging cycle length.

### SUMMARY

Embodiments of this application provide a communication method, apparatus, and system, to enable a terminal device to determine a more appropriate paging discontinuous reception cycle, and facilitate power saving of the terminal device. The invention is defined by the appended claims. Embodiments not falling within the scope of the claims are exemplary.

According to a first aspect, an embodiment of this application provides a communication method. The method includes: A terminal device first receives first information from a core network device, and then determines a paging discontinuous reception cycle of the terminal device based on the first information, where the first information is used to indicate the terminal device whether to use a power-saving paging discontinuous reception cycle. Therefore, the terminal device avoids always selecting a shortest cycle as the paging discontinuous reception cycle, so that the paging discontinuous reception cycle determined by the terminal device is more appropriate, and power saving of the terminal device is facilitated.

In a possible design, that the terminal device determines a paging discontinuous reception cycle of the terminal device based on the first information includes:

When the first information indicates the terminal device to use the power-saving paging discontinuous reception cycle, the terminal device determines that the paging discontinuous reception cycle is the power-saving paging discontinuous reception cycle.

In a possible design, that the terminal device determines a paging discontinuous reception cycle of the terminal device based on the first information includes:
When the first information indicates the terminal device not to use the power-saving paging discontinuous reception cycle, the terminal device determines that the paging discontinuous reception cycle is a shortest cycle in a plurality of preset paging cycles of the terminal device.

In a possible design, before receiving the first information from the core network device, the terminal device further sends second information to the core network device, where the second information is used to indicate whether the terminal device recommends using the power-saving paging discontinuous reception cycle.

In a possible design, the terminal device further receives, based on the determined paging discontinuous reception cycle, a paging message sent by a radio access network device.

According to a second aspect described for illustration purposes only, an embodiment of this application provides a communication method. The method includes: A core network device first determines whether a terminal device is to use a power-saving paging discontinuous reception cycle, and then sends first information to the terminal device, where the first information is used to indicate the terminal device whether to use the power-saving paging discontinuous reception cycle. Therefore, the terminal device avoids always selecting a shortest cycle as a paging discontinuous reception cycle, so that a paging discontinuous reception cycle determined by the terminal device is more appropriate, and power saving of the terminal device is facilitated.

In a possible design, that a core network device determines whether a terminal device is to use a power-saving paging discontinuous reception cycle includes:
The core network device determines, based on a device type of the terminal device and/or a service type of a service initiated by the terminal device, whether the terminal device is to use the power-saving paging discontinuous reception cycle.

In a possible design, the core network device further receives, before determining whether the terminal device is to use the power-saving paging discontinuous reception cycle, second information from the terminal device, where the second information is used to indicate whether the terminal device recommends using the power-saving paging discontinuous reception cycle. Correspondingly, that a core network device determines whether a terminal device is to use a power-saving paging discontinuous reception cycle includes: The core network device determines, based on the second information, whether the terminal device is to use the power-saving paging discontinuous reception cycle.

In a possible design, the core network device further sends third information to a radio access network device, where the third information is used to indicate whether the terminal device is to use the power-saving paging discontinuous reception cycle.

According to a third aspect described for illustration purposes only, an embodiment of this application provides a communication method. The method includes: A first radio access network device first receives third information sent by a core network device, and then determines a paging discontinuous reception cycle of a terminal device based on the third information, where the third information is used to indicate whether the terminal device is to use a power-saving paging discontinuous reception cycle. It is ensured that the paging discontinuous reception cycle of the terminal device that is determined by the radio access network device is the same as a paging discontinuous reception cycle of the terminal device that is determined by the terminal device, so that the paging discontinuous reception cycle determined by the terminal device is more appropriate, and power saving of the terminal device is facilitated.

In a possible design, when the terminal device is in an inactive state, the first radio access network device further sends fourth information to one or more second radio access network devices, where the fourth information is used to indicate whether the terminal device is to use the power-saving paging discontinuous reception cycle. The second radio access network device is a radio access network device located in a same radio access network-based notification area RNA as the first radio access network device.

In a possible design, the first radio access network device further sends a paging message to the terminal device based on the determined paging discontinuous reception cycle.

According to a fourth aspect, an embodiment of this application provides a terminal device. The terminal device includes a transceiver module and a processing module.

The transceiver module is configured to receive first information from a core network device, where the first information is used to indicate the terminal device whether to use a power-saving paging discontinuous reception cycle.

The processing module is configured to determine a paging discontinuous reception cycle of the terminal device based on the first information.

In a possible design, the processing module is specifically configured to:
when the first information indicates the terminal device to use the power-saving paging discontinuous reception cycle, determine, by the terminal device, that the paging discontinuous reception cycle is the power-saving paging discontinuous reception cycle.

In a possible design, the processing module is specifically configured to:
when the first information indicates the terminal device not to use the power-saving paging discontinuous reception cycle, determine, by the terminal device, that the paging discontinuous reception cycle is a shortest cycle in a plurality of preset paging cycles of the terminal device.

In a possible design, the transceiver module is further configured to send, before receiving the first information from the core network device, second information to the core network device, where the second information is used to indicate whether the terminal device recommends using the power-saving paging discontinuous reception cycle.

In a possible design, the transceiver module is further configured to receive, based on the determined paging discontinuous reception cycle, a paging message sent by a radio access network device.

According to a fifth aspect described for illustration purposes only, an embodiment of this application provides a core network device. The core network device includes a processing module and a transceiver module.

The processing module is configured to determine whether a terminal device is to use a power-saving paging discontinuous reception cycle;
The transceiver module is configured to send first information to the terminal device, where the first information is used to indicate the terminal device whether to use the power-saving paging discontinuous reception cycle.

In a possible design, the processing module is specifically configured to:
determine, based on a device type of the terminal device and/or a service type of the terminal device, whether the terminal device is to use the power-saving paging discontinuous reception cycle.

In a possible design, the transceiver module is further configured to receive, before the processing module determines whether the terminal device is to use the power-saving paging discontinuous reception cycle, second information from the terminal device, where the second information is used to indicate whether the terminal device recommends using the power-saving paging discontinuous reception cycle.

The processing module is specifically configured to determine, based on the second information, whether the terminal device is to use the power-saving paging discontinuous reception cycle.

In a possible design, the transceiver module is further configured to send third information to a radio access network device, where the third information is used to indicate whether the terminal device is to use the power-saving paging discontinuous reception cycle.

According to a sixth aspect, an embodiment of this application provides a radio access network device. The radio access network device includes a transceiver module and a processing module.

The transceiver module is configured to receive third information sent by a core network device, where the third information is used to indicate whether a terminal device is to use a power-saving paging discontinuous reception cycle.

The processing module is configured to determine a paging discontinuous reception cycle of the terminal device based on the third information.

In a possible design, the transceiver module is further configured to send, when the terminal device is in an inactive state, fourth information to one or more other radio access network devices that are in a same radio access network-based notification area RNA as the radio access network device, where the fourth information is used to indicate whether the terminal device is to use the power-saving paging discontinuous reception cycle.

In a possible design, the transceiver module is further configured to send a paging message to the terminal device based on the determined paging discontinuous reception cycle.

With reference to any one of the first aspect to the sixth aspect, the following may be further included:
The power-saving paging discontinuous reception cycle is a longest cycle in the plurality of preset paging cycles of the terminal device.

Optionally, the plurality of preset paging cycles include a default paging cycle obtained by the terminal device from a broadcast message, and the terminal device-specific paging cycle obtained by the terminal device from the non-access stratum NAS message.

Optionally, the plurality of preset paging cycles further include a paging discontinuous reception cycle that is obtained by the terminal device from a radio access control RRC message and that is used for radio access network RAN paging.

According to a seventh aspect described for illustration purposes only, an embodiment of this application provides a communication apparatus, including:
a module, a component, or a circuit configured to implement the communication method according to the first aspect; or
a module, a component, or a circuit configured to implement the communication method according to the second aspect; or
a module, a component, or a circuit configured to implement the communication method according to the third aspect.

According to an eighth aspect described for illustration purposes only, an embodiment of this application provides a chip. The chip includes a memory and a processor. The memory is configured to store program instructions, and the processor is configured to invoke the program instructions in the memory to perform the communication method in the embodiments of this application according to the first aspect, the second aspect, or the third aspect.

According to a ninth aspect described for illustration purposes only, an embodiment of this application provides a readable storage medium. The readable storage medium stores a computer program. When the computer program is executed, the communication method in the embodiments of this application according to the first aspect, the second aspect, or the third aspect is implemented.

According to a tenth aspect described for illustration purposes only, an embodiment of this application provides a program product. The program product includes a computer program. The computer program is stored in a readable storage medium. At least one processor of a communication apparatus may read the computer program from the readable storage medium. The at least one processor executes the computer program, so that the communication apparatus implements the communication method in the embodiments of this application according to any one of the first aspect, the second aspect, or the third aspect.

According to an eleventh aspect described for illustration purposes only, an embodiment of this application provides a communication system. The communication system includes the foregoing terminal device, the foregoing core network device, and the foregoing radio access network device.

According to a twelfth aspect described for illustration purposes only, an embodiment of this application provides a communication system. The communication system includes the foregoing core network device and the foregoing radio access network device.

### BRIEF DESCRIPTION OF DRAWINGS

FIG. 1 is a schematic diagram of a communication system according to an embodiment of this application;
FIG. 2 is a schematic diagram of a protocol stack of a radio access network device according to an embodiment of this application;
FIG. 3 is a flowchart of a communication method according to an embodiment of this application;
FIG. 4 is a schematic diagram of a structure of a communication apparatus according to an embodiment of this application;
FIG. 5 is a schematic diagram of a structure of a communication apparatus according to another embodiment of this application;
FIG. 6 is a schematic diagram of a structure of a communication apparatus according to another embodiment of this application;
FIG. 7 is a schematic diagram of a structure of a communication apparatus according to another embodiment of this application;
FIG. 8 is a schematic diagram of a structure of a terminal device according to an embodiment of this application; and
FIG. 9 is a schematic diagram of a structure of a communication system according to an embodiment of this application.

### DESCRIPTION OF EMBODIMENTS

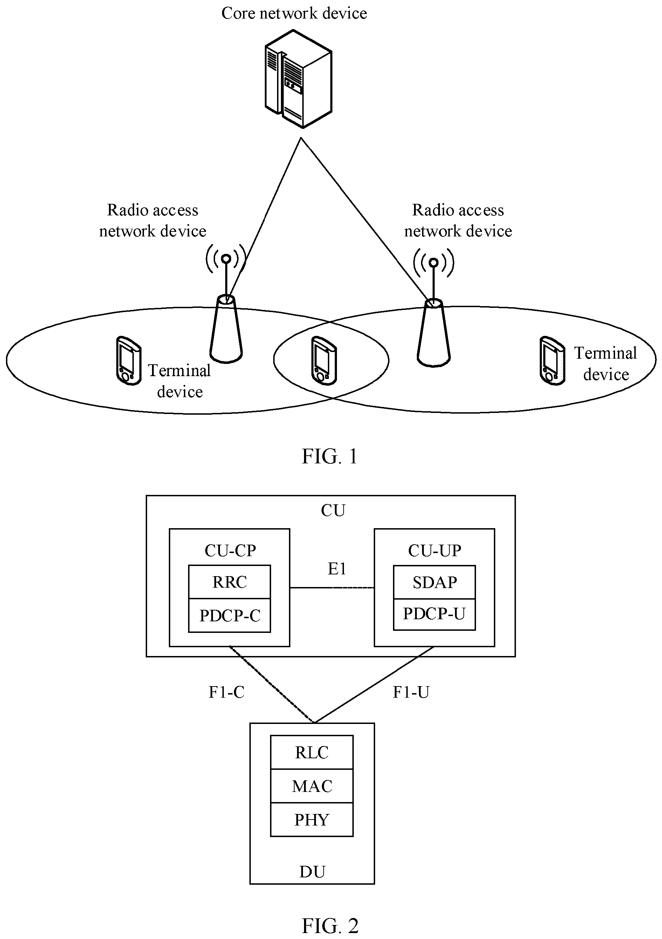

FIG. 1 is a schematic diagram of a communication system according to an embodiment of this application. As shown in FIG. 1, the communication system includes a network device and a terminal device, and the network device may include a radio access network device and a core network device. The terminal device is connected to the radio access network device in a wireless manner, and the radio access network device is connected to the core network device in a wireless or wired manner. The core network device and the radio access network device may be different physical devices independent of each other, or functions of the core network device and logical functions of the radio access network device may be integrated into a same physical device, or some functions of the core network device and some functions of the radio access network device may be integrated into one physical device. The terminal device may be at a fixed position or may be movable. FIG. 1 is merely a schematic diagram. The communication system may further include another network device, for example, a wireless relay device and a wireless backhaul device which are not shown in FIG. 1. Quantities of core network devices, radio access network devices, and terminal devices that are included in the communication system are not limited in the embodiments of this application. It should be noted that the two radio access network devices shown in FIG. 1 may be connected to a same core network device, or may be connected to different core network devices.

The following explains and describes some terms in this application, to help a person skilled in the art have a better understanding.

Radio access network (radio access network, RAN) device: The radio access network device is a device through which a terminal device accesses a wireless network, and may be an evolved NodeB (evolved NodeB, eNB or eNodeB) in long term evolution (long term evolution, LTE), a relay station or an access point, or a gNB in a 5G network, for example, a transmission reception point (transmission reception point, TRP) or a controller. This is not limited herein. In a possible manner, the radio access network device may be a base station (for example, a gNB) with an architecture in which a centralized unit (centralized unit, CU) and a distributed unit (distributed unit, DU) are separated. FIG. 2 is a schematic diagram of a protocol stack of a radio access network device according to an embodiment of this application. The RAN device may be connected to a core network device (for example, an LTE core network or a 5G core network). The CU and the DU may be understood as division of the base station from a perspective of logical functions. The CU and the DU may be physically separated or physically deployed together. A plurality of DUs may share one CU. Alternatively, one DU may be connected to a plurality of CUs (not shown in the figure). The CU and the DU may be connected through an interface, for example, an F1 interface. The CU and the DU may be divided based on protocol layers of a wireless network. For example, functions of a radio resource control (radio resource control, RRC) layer, a service data adaptation protocol (service data adaptation protocol, SDAP) layer, and a packet data convergence protocol (packet data convergence protocol, PDCP) layer are set on the CU, and functions of a radio link control (radio link control, RLC) layer, a media access control (media access control, MAC) layer, a physical (physical, PHY) layer, and the like are set on the DU. It may be understood that, division into processing functions of the CU and the DU based on the protocol layers is merely an example, and the processing functions of the CU and the DU may alternatively be obtained through division in another manner. For example, the CU or the DU may be divided to have more functions of protocol layers. For example, the CU or the DU may alternatively be divided to have some processing functions of protocol layers. In a design, some functions of the RLC layer and functions of a protocol layer above the RLC layer are set on the CU, and remaining functions of the RLC layer and functions of a protocol layer below the RLC layer are set on the DU. In another design, functions of the CU or the DU may alternatively be obtained through division based on a service type or another system requirement. For example, division is performed based on a latency. Functions whose processing time periods need to meet a latency requirement are set on the DU, and functions whose processing time periods do not need to meet the latency requirement are set on the CU. In another design, the CU may alternatively have one or more functions of a core network. One or more CUs may be set in a centralized manner or a separated manner. For example, the CUs may be set on a network side to facilitate centralized management. The DU may have a plurality of radio frequency functions, or the radio frequency functions may be remotely set.

Functions of the CU may be implemented by one entity, or may be implemented by different entities. For example, the functions of the CU may be further divided. For example, a control plane (CP) is separated from a user plane (UP) to obtain a control plane of the CU (CU-CP) and a user plane of the CU (CU-UP). For example, the CU-CP and the CU-UP may be implemented by different function entities. The CU-CP and the CU-UP may be coupled to the DU to jointly implement functions of the base station. In a possible implementation, the CU-CP is responsible for control plane functions, and mainly includes an RRC entity and a PDCP-C entity. The PDCP-C entity is mainly responsible for data encryption and decryption, integrity protection, data transmission, and the like on the control plane. The CU-UP is responsible for user plane functions, and mainly includes an SDAP entity and a PDCP-U entity. The SDAP entity is mainly responsible for processing data of the core network and mapping a data flow (flow) to a bearer. The PDCP-U entity is mainly responsible for encryption and decryption, integrity protection, header compression, serial number maintenance, data transmission, and the like on a data plane. The CU-CP is connected to the CU-UP by using an E1 interface. The CU-CP, representing a gNB, is connected to the core network by using an Ng interface, and the CU-CP is connected to the DU by using an F1-C (control plane) interface. The CU-UP is connected to the DU by using an F1-U (user plane) interface. Certainly, in another possible implementation, the PDCP-C entity is in the CU-UP.

Core network device: The core network device may be an access and mobility management function (access and mobility management function, AMF) network element, a session management function (session management function, SMF) network element, a mobility management entity (mobility management entity, MME), or another core network device. The AMF network element is mainly responsible for: connection to a wireless network, receiving and sending a NAS message for communicating with a terminal device, performing management such as registration, mobility, reachability, encryption, and authentication on the terminal device, and transmitting a NAS message between the terminal device and the SMF network element.

Terminal device: The terminal device may be a wireless terminal or a wired terminal. The wireless terminal may be a device having a wireless transceiver function, and may be deployed on land, including an indoor or outdoor device, a handheld device, or a vehicle-mounted device; or may be deployed on a water surface (for example, on a ship); or may be deployed in the air (for example, on an airplane, a balloon, or a satellite). The terminal device may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. This is not limited herein. It may be understood that, in the embodiments of this application, the terminal device may also be referred to as user equipment (user equipment, UE).

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one item (piece) of the following" or a similar expression thereof means any combination of these items, including a singular item (piece) or any combination of plural items (pieces). For example, at least one item (piece) of a, b, or c may represent: a, b, c, a and b, a and c, b and c, or a, b, and c, where a, b, and c may be singular or plural.

It may be understood that in the embodiments of this application, a terminal device and/or a network device may perform some or all steps in the embodiments of this application. These steps or operations are merely examples. In the embodiments of this application, other operations or variations of various operations may be further performed. In addition, the steps may be performed in a sequence different from a sequence presented in the embodiments of this application, and not all the operations in the embodiments of this application may be performed.

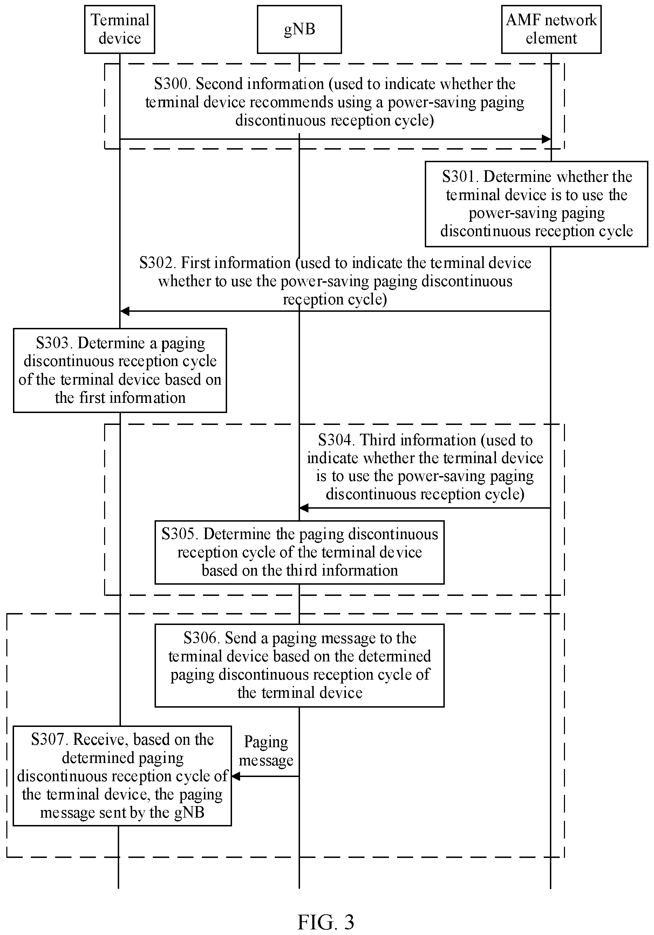

FIG. 3 is a flowchart of a communication method according to an embodiment of this application. As shown in FIG. 3, the method in this embodiment is described by using an example in which a core network device is an AMF network element and a radio access network device is a gNB. This embodiment is not limited thereto. The method in this embodiment may include the following steps.

S301. The AMF network element determines whether a terminal device is to use a power-saving paging discontinuous reception cycle.

S302. The AMF network element sends first information to the terminal device. Correspondingly, the terminal device receives the first information from the AMF network element.

S303. The terminal device determines a paging discontinuous reception cycle of the terminal device based on the first information.

In this embodiment, the AMF network element may determine whether the terminal device is to use the power-saving paging discontinuous reception cycle (Paging DRX cycle), and then the AMF network element sends the first information to the terminal device, where the first information is used to indicate the terminal device whether to use the power-saving paging discontinuous reception cycle. The AMF network element may send the first information to the terminal device via the gNB. Correspondingly, the terminal device receives the first information, and then the terminal device determines the paging discontinuous reception cycle of the terminal device based on the first information.

If the first information indicates the terminal device to use the power-saving paging discontinuous reception cycle, the terminal device determines that the paging discontinuous reception cycle is the power-saving paging discontinuous reception cycle.

The power-saving paging discontinuous reception cycle is: a terminal device-specific cycle, a longest cycle in a plurality of preset paging cycles of the terminal device, or a preset power-saving paging discontinuous reception cycle. The terminal device-specific cycle may be a terminal device-specific cycle (UE-specific cycle) obtained by the terminal device from a NAS message, or the terminal device-specific cycle may be a paging discontinuous reception cycle that is obtained from an RRC message and that is used for RAN paging. The preset power-saving paging discontinuous reception cycle may be different from the terminal device-specific cycle, or may be different from each preset paging cycle in the plurality of preset paging cycles.

If the first information indicates the terminal device not to use the power-saving paging discontinuous reception cycle, the terminal device determines that the paging discontinuous reception cycle is a shortest cycle in the plurality of preset paging cycles of the terminal device.

The plurality of preset paging cycles may include a default paging cycle (default paging cycle) obtained by the terminal device from a broadcast message and the terminal device-specific paging cycle obtained by the terminal device from the NAS message. Optionally, the plurality of preset paging cycles may further include the paging discontinuous reception cycle that is obtained by the terminal device from the RRC message and that is used for RAN paging.

If the terminal device is in an idle state, the plurality of preset paging cycles include the default paging cycle obtained by the terminal device from the broadcast message and the terminal device-specific paging cycle obtained by the terminal device from the NAS message. In this embodiment, the terminal device receives the broadcast message (for example, a system message) sent by the gNB, where the broadcast message includes the default paging cycle, and the terminal device obtains the default paging cycle from the broadcast message, where the default paging cycle is one preset paging cycle. The terminal device further receives the NAS message from the AMF network element, where the NAS message includes the terminal device-specific paging cycle. The terminal device obtains the terminal device-specific paging cycle from the NAS message, where the terminal device-specific paging cycle is also one preset paging cycle. When the terminal device is in the idle state, there are two preset paging cycles of the terminal device. When the first information indicates the terminal device to use a power-saving preset paging cycle, if the power-saving preset paging cycle is the terminal device-specific cycle, the paging discontinuous reception cycle of the terminal device is the terminal device-specific paging cycle in the two preset paging cycles that is obtained from the NAS message; if the power-saving preset paging cycle is the longest cycle in the plurality of preset paging cycles of the terminal device, the terminal device determines the longest cycle as the paging discontinuous reception cycle from the default paging cycle and the terminal device-specific paging cycle obtained by the terminal device from the NAS message; or if the power-saving preset paging cycle is the preset power-saving paging discontinuous reception cycle, the terminal device determines that the paging discontinuous reception cycle is the preset power-saving paging discontinuous reception cycle. The preset power-saving paging discontinuous reception cycle may be, for example, a default paging cycle that is sent by the gNB through broadcasting and that is dedicated to power saving.

If the terminal device is in an inactive state, the plurality of preset paging cycles include: the default paging cycle obtained by the terminal device from the broadcast message, the terminal device-specific paging cycle obtained by the terminal device from the NAS message, and the paging discontinuous reception cycle that is obtained by the terminal device from the RRC message and that is used for RAN paging. In this embodiment, the terminal device receives the broadcast message (for example, a system message) sent by the gNB, where the broadcast message includes the default paging cycle, and the terminal device obtains the default paging cycle from the broadcast message, where the default paging cycle is one preset paging cycle. The terminal device further receives the NAS message from the AMF network element, where the NAS message includes the terminal device-specific paging cycle. The terminal device obtains the terminal device-specific paging cycle from the NAS message, where the terminal device-specific paging cycle is also one preset paging cycle. The terminal device further receives the RRC message sent by the gNB, where the RRC message includes the paging discontinuous reception cycle used for RAN paging, and the terminal device obtains the paging discontinuous reception cycle used for RAN paging from the RRC message, where the paging discontinuous reception cycle used for RAN paging is also one preset paging cycle. When the terminal device is in the inactive state, there are three preset paging cycles of the terminal device. When the first information indicates the terminal device to use a power-saving preset paging cycle, if the power-saving preset paging cycle is the terminal device-specific cycle, the paging discontinuous reception cycle of the terminal device is the terminal device-specific paging cycle in the three preset paging cycles that is obtained from the NAS message or the paging discontinuous reception cycle in the three preset paging cycles that is obtained from the RRC message and that is used for RAN paging; if the power-saving preset paging cycle is the longest cycle in the plurality of preset paging cycles of the terminal device, the terminal device determines the longest cycle as the paging discontinuous reception cycle from the default paging cycle, the terminal device-specific paging cycle obtained by the terminal device from the NAS message, and the paging discontinuous reception cycle that is obtained from the RRC message and that is used for RAN paging; or if the power-saving preset paging cycle is the preset power-saving paging discontinuous reception cycle, the terminal device determines that the paging discontinuous reception cycle is the preset power-saving paging discontinuous reception cycle. The preset power-saving paging discontinuous reception cycle may be, for example, a default paging cycle that is sent by the gNB through broadcasting and that is dedicated to power saving.

In the communication method provided in this embodiment, the AMF network element determines whether the terminal device is to use the power-saving paging discontinuous reception cycle, and then sends the first information to the terminal device. Correspondingly, the terminal device receives the first information from the AMF network element, and determines, based on the first information, the paging discontinuous reception cycle of the terminal device. Therefore, the terminal device avoids always selecting a shortest cycle as the paging discontinuous reception cycle, so that the paging discontinuous reception cycle determined by the terminal device is more appropriate, and power saving of the terminal device is facilitated.

Optionally, some implementations of S301 may be as follows: The AMF network element may determine, based on a device type of the terminal device, whether the terminal device is to use the power-saving paging discontinuous reception cycle. For example, if the device type of the terminal device indicates that the terminal device is a terminal device whose power needs to be saved, it is determined that the terminal device is to use the power-saving paging discontinuous reception cycle. For example, if the device type of the terminal device is a machine type communication (Machine Type Communication, MTC) device, a narrowband Internet of things (Narrowband Internet of Things, NB-IoT) device, or an evolved MTC or NB-IoT device, for example, an eMTC (enhanced MTC) device or an mMTC (massive MTC) device, it is determined that the terminal device is to use the power-saving paging discontinuous reception cycle.

Optionally, some implementations of S301 may be as follows: The AMF network element may determine, based on a service type of the terminal device, whether the terminal device is to use the power-saving paging discontinuous reception cycle. For example, if the device type of the terminal device indicates that the terminal device is a terminal device whose power needs to be saved, it is determined that the terminal device is to use the power-saving paging discontinuous reception cycle. For example, if the service type of the terminal device indicates that a quality of service (quality of service, QoS) requirement of the terminal device has a low requirement on a latency, it is determined that the terminal device is to use the power-saving paging discontinuous reception cycle.

Optionally, some implementations of S301 may be as follows: The AMF network element may determine, based on a device type of the terminal device and a service type of the terminal device, whether the terminal device is to use the power-saving paging discontinuous cycle. For example, when the AMF network element determines, based on the device type of the terminal device, that the terminal device is to use the power-saving paging discontinuous reception cycle, and determines, based on the service type of the terminal device, that the terminal device is to use the power-saving paging discontinuous reception cycle, the AMF network element determines that the terminal device is to use the power-saving paging discontinuous reception cycle.

In some other implementations, before S301 is performed, the method may further include the following step:
S300. The terminal device sends second information to the AMF network element. Correspondingly, the AMF network element receives the second information from the terminal device.

In this embodiment, the terminal device further sends the second information to the AMF network element, where the second information is used to indicate whether the terminal device recommends using the power-saving paging discontinuous reception cycle. The terminal device may send the second information to the AMF network element via the gNB. The AMF network element receives the second information from the terminal device. Correspondingly, an implementation of S301 may be: The AMF network element determines, based on the second information, whether the terminal device is to use the power-saving paging discontinuous reception cycle. For example, if the second information indicates that the terminal device recommends using the power-saving paging discontinuous reception cycle, the AMF network element determines that the terminal device is to use the power-saving paging discontinuous reception cycle; or if the second information indicates that the terminal device recommends not using the power-saving paging discontinuous reception cycle, the AMF network element determines that the terminal device is not to use the power-saving paging discontinuous reception cycle. However, this embodiment is not limited to this example. For another example, the AMF network element determines, based not only on the second information, but also on the device type of the terminal device and/or the service type of the terminal device, whether the terminal device is to use the power-saving paging discontinuous reception cycle. For example, when the second information indicates that the terminal device recommends using the power-saving paging discontinuous reception cycle, if the AMF network element determines, based on the device type of the terminal device and/or the service type of the terminal device, that the terminal device is to use the power-saving paging discontinuous reception cycle, it is finally determined that the terminal device is to use the power-saving paging discontinuous reception cycle. Otherwise, it is determined that the terminal device is not to use the power-saving paging discontinuous reception cycle. However, this embodiment is not limited to this example.

Optionally, the terminal device may send the second information to the AMF network element in a process of performing initial registration (Initial Registration) and mobility registration (Mobility Registration) with the AMF network element. Optionally, the terminal device further sends, to the AMF network element, information used to indicate a terminal device-specific paging cycle expected by the terminal device, and the AMF network element determines the terminal device-specific paging cycle of the terminal device based on the information used to indicate the terminal device-specific paging cycle expected by the terminal device. For example, the terminal device-specific paging cycle determined by the AMF network element may be the same as or different from the terminal device-specific paging cycle expected by the terminal device, and this depends on a specific application scenario. The AMF network element may send the determined terminal device-specific paging cycle to the terminal device by using the NAS message.

Optionally, the terminal device may send the second information and the information used to indicate the terminal device-specific paging cycle expected by the terminal device to the AMF network element by using a same message or different messages.

Optionally, the AMF network element may send the first information and the determined terminal device-specific paging cycle to the terminal device by using a same message or different messages.

In some embodiments, after S301, the method may further include the following steps:
S304. The AMF network element sends third information to the gNB. Correspondingly, the gNB receives the third information sent by the AMF network element. It should be noted that a sequence of performing S304 and S303 is not limited.
S305. The gNB determines the paging discontinuous reception cycle of the terminal device based on the third information.

In this embodiment, after the AMF network element determines whether the terminal device is to use the power-saving paging discontinuous reception cycle, the AMF network element further sends the third information to the gNB, where the third information is used to indicate whether the terminal device is to use the power-saving paging discontinuous reception cycle. For example, the AMF network element may send the third information to the gNB by using an Ng interface. Correspondingly, the gNB receives the third information, and then the gNB determines the paging discontinuous reception cycle of the terminal device based on the third information. For a specific implementation process, refer to related descriptions about that the terminal device determines the paging discontinuous reception cycle of the terminal device based on the third information. Details are not described herein again.

The AMF network element not only notifies the terminal device of whether the terminal device is to use the power-saving paging discontinuous reception cycle, but also notifies the gNB of whether the terminal device is to use the power-saving paging discontinuous reception cycle, to ensure that the paging discontinuous reception cycles of the terminal device that are separately determined by the terminal device and the gNB are the same.

Optionally, after the AMF network element determines the terminal device-specific paging cycle of the terminal device, the AMF network element further sends the terminal device-specific paging cycle of the terminal device to the gNB.

Optionally, the AMF network element may send the third information and the determined terminal device-specific paging cycle to the gNB by using a same message or different messages. For example, the AMF network element may send the third information and/or the determined terminal device-specific paging cycle to the gNB by using a message used to indicate to page the terminal device. The terminal device-specific paging cycle may be, for example, the terminal device-specific paging cycle corresponding to the terminal device in the idle state.

Optionally, the AMF network element may send the terminal device-specific paging cycle to the gNB in a process in which the AMF network element exchanges an inactive-state-related context of the terminal device with the gNB. For example, the AMF network element sends a core network assistance information (corn network assistance information) message including the third information and/or the terminal device-specific paging cycle to the gNB. The terminal device-specific paging cycle may be, for example, the terminal device-specific paging cycle corresponding to the terminal device in the inactive state.

In some embodiments, after S305, the method may further include the following steps:
S306. The gNB sends a paging message to the terminal device based on the determined paging discontinuous reception cycle of the terminal device.
S307. The terminal device receives, based on the determined paging discontinuous reception cycle of the terminal device, the paging message sent by the gNB.

In this embodiment, when needing to page the terminal device, the gNB sends the paging message to the terminal device based on the paging discontinuous reception cycle of the terminal device determined in S305. Correspondingly, the terminal device receives, based on the paging discontinuous reception cycle of the terminal device determined in S303, the paging message sent by the gNB. Because the paging discontinuous reception cycle determined by the gNB and the paging discontinuous reception cycle determined by the terminal device are the same, it can be ensured that the gNB successfully pages the terminal device.

Optionally, the gNB may perform S306 after receiving the message that is sent by the AMF network element and that is used to indicate to page the terminal device, and the terminal device is, for example, in the idle state. Optionally, when the terminal device is in the inactive state, the gNB may determine whether to send the paging message to the terminal device.

In some embodiments, when the terminal device is in the inactive state, a first gNB (the first gNB is, for example, the foregoing gNB) further sends fourth information to one or more second gNBs. The second gNB is a gNB that is located in a same RNA as the first gNB.

In this embodiment, if the first gNB is a source access network device (which may also be referred to as a source serving network device) when the terminal device is in the inactive state, the first gNB may allocate a radio access network-based notification area (RAN-based Notification Area, RNA) to the terminal device that is in the inactive state, where a radio access network device that configures the terminal device to enter the inactive state and/or stores context information of the terminal device is generally referred to as the source network device or an anchor network device, and an area corresponding to the RNA includes an area corresponding to at least one cell. Generally, an area range corresponding to the RNA is less than or equal to an area range corresponding to a tracking area identity (Tracking Area Identity, TAI) list. It may be understood that the TAI list or the RNA is a logical concept. A configuration of the RNA may include at least one of the following: (1) a cell list, including at least one cell identity; and (2) a RAN area list, including at least one tracking area identity (Tracking Area Identity, TAC), or including at least one TAC and at least one RAN area code (RAN area code, RANAC).

In an implementation, after the first gNB receives the third information sent by the AMF network element, the first gNB may send the fourth information to the one or more second gNBs based on the third information. The fourth information is used to indicate whether the terminal device is to use the power-saving paging discontinuous reception cycle. For example, if the third information indicates that the terminal device is to use the power-saving paging discontinuous reception cycle, the fourth information indicates that the terminal device is to use the power-saving paging discontinuous reception cycle; or if the third information indicates that the terminal device is not to use the power-saving paging discontinuous reception cycle, the fourth information indicates that the terminal device is not to use the power-saving paging discontinuous reception cycle. Optionally, the first gNB may send the fourth information to the one or more second gNBs by using an Xn interface. After receiving the fourth information, each second gNB determines the paging discontinuous reception cycle of the terminal device based on the fourth information. Optionally, the second gNB may send a paging message to the terminal device based on the paging discontinuous reception cycle of the terminal device. Correspondingly, the terminal device may receive the paging message sent by the second gNB.

Optionally, the first gNB may send a RAN paging message including the fourth information to the one or more second gNBs. Optionally, the first gNB may further send a paging cycle of the terminal device to the one or more second gNBs. The paging cycle of the terminal device may be the terminal device-specific paging cycle obtained by the terminal device from the NAS message, or the paging discontinuous cycle that is used for RAN paging and that is obtained by the terminal device from the RRC message of the first gNB, or a smaller value of the terminal device-specific paging cycle and the paging discontinuous cycle. Optionally, the first gNB may send the RAN paging message including the fourth information and the paging cycle of the terminal device to the one or more second gNBs. Optionally, after receiving the RAN paging message sent by the first gNB, the second gNB sends the paging message to the terminal device.

Therefore, when the terminal is in the inactive state, the paging discontinuous reception cycle determined by the terminal device may also be more appropriate, and power saving of the terminal device is facilitated.

In another implementation, after receiving the first information sent by the AMF network element, the terminal device further sends fifth information to the first gNB, where the fifth information is used to indicate whether the terminal device is to use the power-saving paging discontinuous reception cycle. After receiving the fifth information sent by the terminal device, the first gNB sends the fourth information to the one or more second gNBs. For a processing process after the first gNB sends the fourth information, refer to descriptions in the foregoing implementation. Details are not described herein again. Optionally, the fifth information may be included in a terminal device assistance information (UE assistance information) message sent by the terminal device to the first gNB.

It should be noted that any one of the foregoing embodiments may be implemented independently, or any combination of at least two of the foregoing embodiments may be implemented. This is not limited.

It may be understood that, in the foregoing embodiments, the operations and steps implemented by the terminal device may alternatively be implemented by a component (for example, a chip or a circuit) that may be used in the terminal device. This is not limited in this embodiment of this application. The operations and steps implemented by the core network device may alternatively be implemented by a component (for example, a chip or a circuit) that may be used in the core network device. This is not limited in this embodiment of this application. The operations and steps implemented by the radio access network device may alternatively be implemented by a component (for example, a chip or a circuit) that may be used in the radio access network device. This is not limited in this embodiment of this application.

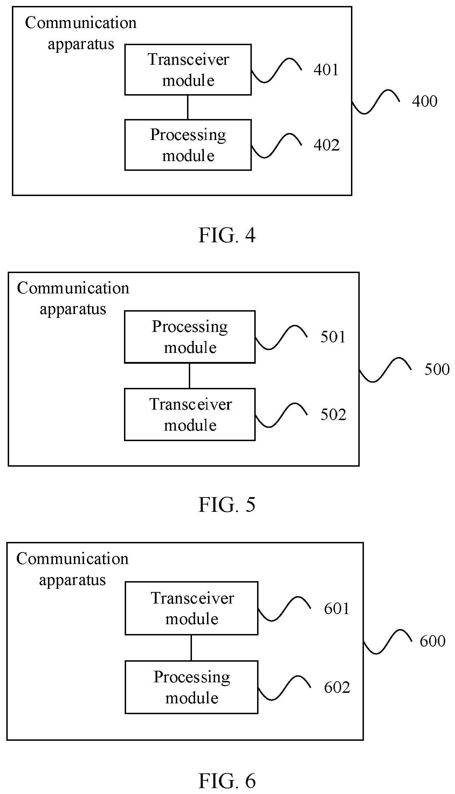

FIG. 4 is a schematic diagram of a structure of a communication apparatus according to an embodiment of this application. As shown in FIG. 4, the communication apparatus may be a terminal device, or may be a component (for example, an integrated circuit or a chip) of the terminal device, or may be another communication module, and is configured to implement operations corresponding to the terminal device in FIG. 3 and the corresponding method embodiment. The communication apparatus 400 in this embodiment includes a transceiver module 401 and a processing module 402.

The transceiver module 401 is configured to receive first information from a core network device, where the first information is used to indicate the terminal device whether to use a power-saving paging discontinuous reception cycle.

The processing module 402 is configured to determine a paging discontinuous reception cycle of the terminal device based on the first information.

Optionally, the processing module 402 is specifically configured to:
when the first information indicates the terminal device to use the power-saving paging discontinuous reception cycle, determine, by the terminal device, that the paging discontinuous reception cycle is the power-saving paging discontinuous reception cycle.

Optionally, the processing module 402 is specifically configured to:
when the first information indicates the terminal device not to use the power-saving paging discontinuous reception cycle, determine, by the terminal device, that the paging discontinuous reception cycle is a shortest cycle in a plurality of preset paging cycles of the terminal device.

Optionally, the power-saving paging discontinuous reception cycle is: a terminal device-specific cycle obtained by the terminal device from a non-access stratum NAS message, a longest cycle in the plurality of preset paging cycles of the terminal device, or a preset power-saving paging discontinuous reception cycle.

Optionally, the plurality of preset paging cycles include a default paging cycle that is obtained from a broadcast message received by the transceiver module, and the terminal device-specific paging cycle that is obtained from the NAS message received by the transceiver module.

Optionally, the plurality of preset paging cycles further include a paging discontinuous reception cycle that is obtained from an RRC message received by the transceiver module and that is used for RAN paging.

Optionally, the transceiver module 401 is further configured to send, before receiving the first information from the core network device, second information to the core network device, where the second information is used to indicate whether the terminal device recommends using the power-saving paging discontinuous reception cycle.

Optionally, the transceiver module 401 is further configured to receive, based on the determined paging discontinuous reception cycle, a paging message sent by a radio access network device.

The communication apparatus in this embodiment may be configured to execute the technical solution of the terminal device in the foregoing method embodiment. Implementation principles and technical effects are similar, and details are not described herein again.

FIG. 5 is a schematic diagram of a structure of a communication apparatus according to another embodiment of this application. As shown in FIG. 5, the communication apparatus may be a core network device (for example, an AMF network element), or may be a component (for example, an integrated circuit or a chip) of the core network device, or may be another communication module, and is configured to implement operations corresponding to the AMF network element in FIG. 3 and the corresponding method embodiment. The communication apparatus 500 in this embodiment includes a processing module 501 and a transceiver module 502.

The processing module 501 is configured to determine whether a terminal device is to use a power-saving paging discontinuous reception cycle.

The transceiver module 502 is configured to send first information to the terminal device, where the first information is used to indicate the terminal device whether to use the power-saving paging discontinuous reception cycle.

Optionally, the processing module 501 is specifically configured to:
determine, based on a device type of the terminal device and/or a service type of the terminal device, whether the terminal device is to use the power-saving paging discontinuous reception cycle.

Optionally, the transceiver module 502 is further configured to receive, before the processing module determines whether the terminal device is to use the power-saving paging discontinuous reception cycle, second information from the terminal device, where the second information is used to indicate whether the terminal device recommends using the power-saving paging discontinuous reception cycle.

The processing module 501 is specifically configured to determine, based on the second information, whether the terminal device is to use the power-saving paging discontinuous reception cycle.

Optionally, the power-saving paging discontinuous reception cycle is: a terminal device-specific cycle obtained by the terminal device from a NAS message, a longest cycle in a plurality of preset paging cycles of the terminal device, or a preset power-saving paging discontinuous reception cycle.

Optionally, the plurality of preset paging cycles include a default paging cycle obtained by the terminal device from a broadcast message, and the terminal device-specific paging cycle obtained by the terminal device from the NAS message.

Optionally, the plurality of preset paging cycles further include a paging discontinuous reception cycle that is obtained by the terminal device from an RRC message and that is used for RAN paging.

Optionally, the transceiver module 502 is further configured to send third information to a radio access network device, where the third information is used to indicate whether the terminal device is to use the power-saving paging discontinuous reception cycle.

The communication apparatus in this embodiment may be configured to execute the technical solution of the core network device in the foregoing method embodiment. Implementation principles and technical effects are similar, and details are not described herein again.

FIG. 6 is a schematic diagram of a structure of a communication apparatus according to another embodiment of this application. As shown in FIG. 6, the communication apparatus may be a radio access network device, or may be a component (for example, an integrated circuit or a chip) of the radio access network device, or may be another communication module, and is configured to implement operations corresponding to the gNB in FIG. 3 and the corresponding method embodiment. The communication apparatus 600 in this embodiment includes a transceiver module 601 and a processing module 602.

The transceiver module 601 is configured to receive third information sent by a core network device, where the third information is used to indicate whether a terminal device is to use a power-saving paging discontinuous reception cycle.

The processing module 602 is configured to determine a paging discontinuous reception cycle of the terminal device based on the third information.

Optionally, the power-saving paging discontinuous reception cycle is: a terminal device-specific cycle obtained by the terminal device from a NAS message, a longest cycle in a plurality of preset paging cycles of the terminal device, or a preset power-saving paging discontinuous reception cycle.

Optionally, the plurality of preset paging cycles include a default paging cycle obtained by the terminal device from a broadcast message, and the terminal device-specific paging cycle obtained by the terminal device from the non-access stratum NAS message.

Optionally, the plurality of preset paging cycles further include a paging discontinuous reception cycle that is obtained by the terminal device from an RRC message and that is used for RAN paging.

Optionally, the transceiver module 601 is further configured to send, when the terminal device is in an inactive state, fourth information to one or more other radio access network devices that are in a same RNA as the radio access network device, where the fourth information is used to indicate whether the terminal device is to use the power-saving paging discontinuous reception cycle.

Optionally, the transceiver module 601 is further configured to send a paging message to the terminal device based on the determined paging discontinuous reception cycle.

The communication apparatus in this embodiment may be configured to execute the technical solution of the radio access network device in the foregoing method embodiment. Implementation principles and technical effects are similar, and details are not described herein again.

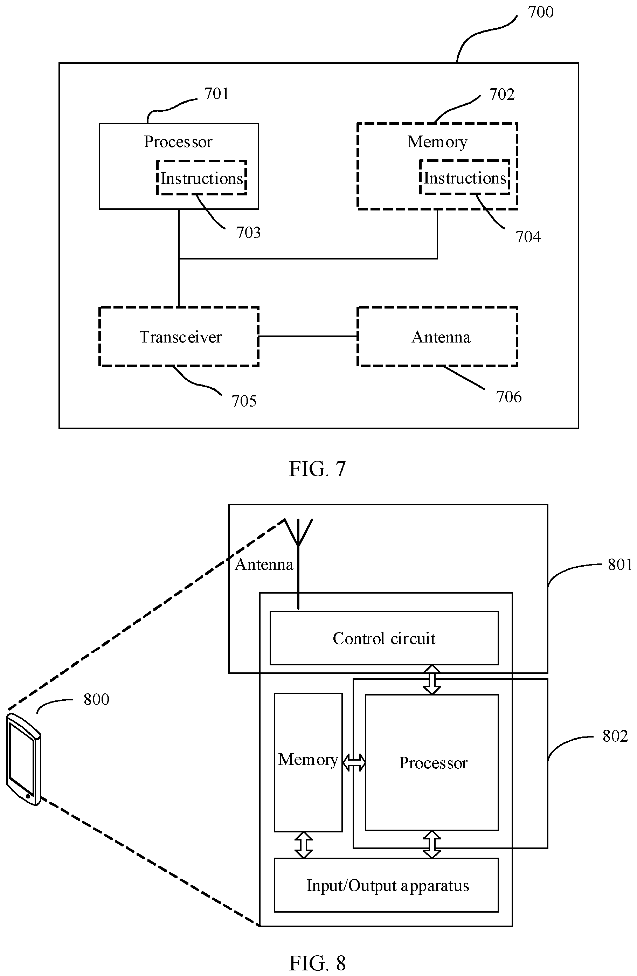

FIG. 7 is a schematic diagram of a structure of a communication apparatus according to another embodiment of this application. As shown in FIG. 7, the communication apparatus 700 in this embodiment may be the terminal device (or a component that may be used in the terminal device), the core network device (or a component that may be used in the core network device), or the radio access network device (or a component that may be used in the radio access network device) mentioned in the foregoing method embodiments. The communication apparatus may be configured to implement the method that corresponds to the terminal device, the core network device, or the radio access network device and that is described in the foregoing method embodiments. For details, refer to the descriptions in the foregoing method embodiments.

The communication apparatus 700 may include one or more processors 701. The processor 701 may also be referred to as a processing unit, and may implement a specific control or processing function. The processor 701 may be a general-purpose processor, a dedicated processor, or the like. For example, the processor 701 may be a baseband processor or a central processing unit. The baseband processor may be configured to process a communication protocol and communication data. The central processing unit may be configured to: control the communication apparatus, execute a software program, and process data of the software program.

In an optional design, the processor 701 may further store instructions 703 or data (for example, intermediate data). The instructions 703 may be run by the processor, so that the communication apparatus 700 performs the method that corresponds to the terminal device, the core network device, or the radio access network device and that is described in the foregoing method embodiments.

In another possible design, the communication apparatus 700 may include a circuit, and the circuit may implement the sending, receiving, or communication function in the foregoing method embodiments.

Optionally, the communication apparatus 700 may include one or more memories 702. The memory may store instructions 704, and the instructions may be run on the processor, so that the communication apparatus 700 performs the method described in the foregoing method embodiments.

Optionally, the memory may also store data. The processor and the memory may be separately disposed, or may be integrated together.

Optionally, the communication apparatus 700 may further include a transceiver 705 and/or an antenna 706. The processor 701 may be referred to as a processing unit, and controls the communication apparatus (the terminal device, the core network device, or the radio access network device). The transceiver 705 may be referred to as a transceiver unit, a transceiver, a transceiver circuit, a transceiver, or the like, and is configured to implement a transceiver function of the communication apparatus.

In a design, if the communication apparatus 700 is configured to implement operations corresponding to the terminal device in the foregoing embodiments, for example, the transceiver 705 may receive first information from a core network device, where the first information is used to indicate the terminal device whether to use a power-saving paging discontinuous reception cycle, and the processor 701 determines a paging discontinuous reception cycle of the terminal device based on the first information.

For specific implementation processes of the transceiver 705 and the processor 701, refer to related descriptions in the foregoing embodiments. Details are not described herein again.

In another design, if the communication apparatus is configured to implement operations corresponding to the core network device in the foregoing embodiments, for example, the processor 701 may determine whether a terminal device is to use a power-saving paging discontinuous reception cycle, and the transceiver 705 sends first information to the terminal device, where the first information is used to indicate the terminal device whether to use the power-saving paging discontinuous reception cycle.

For specific implementation processes of the processor 701 and the transceiver 705, refer to related descriptions in the foregoing embodiments. Details are not described herein again.

In another design, if the communication apparatus is configured to implement operations corresponding to the radio access network device in the foregoing embodiments, for example, the transceiver 705 may receive third information sent by a core network device, where the third information is used to indicate whether a terminal device is to use a power-saving paging discontinuous reception cycle, and the processor 701 determines a paging discontinuous reception cycle of the terminal device based on the third information.

For specific implementation processes of the processor 701 and the transceiver 705, refer to related descriptions in the foregoing embodiments. Details are not described herein again.

The processor 701 and the transceiver 705 that are described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various 1C process technologies, for example, a complementary metal oxide semiconductor (complementary metal oxide semiconductor, CMOS), an n-type metal oxide semiconductor (n-type metal oxide semiconductor. NMOS), a p-type metal oxide semiconductor (p-type metal oxide semiconductor, PMOS), a bipolar junction transistor (Bipolar Junction Transistor, BJT), a bipolar CMOS (BiCMOS), silicon germanium (SiGe), and gallium arsenide (GaAs).

Although the communication apparatus 700 is described in the foregoing embodiment by using the terminal device, the core network device, or the radio access network device as an example, the scope of the communication apparatus described in this application is not limited to the terminal device, the core network device, or the radio access network device, and a structure of the communication apparatus may not be limited to that shown in FIG. 7. The communication apparatus 700 may be an independent device or may be a part of a relatively large device. For example, the device may be:
(1) an independent integrated circuit IC, a chip, or a chip system or subsystem;
(2) a set including one or more ICs, where optionally, the IC set may further include a storage component configured to store data and/or instructions;
(3) an ASIC, for example, a modem (MSM);
(4) a module that can be embedded in another device;
(5) a receiver, a wireless device, a mobile unit, a network device, or the like; and
(6) others or the like.

FIG. 8 is a schematic diagram of a structure of a terminal device according to an embodiment of this application. The terminal device is applicable to the terminal device described in the foregoing embodiments of this application. For ease of description, FIG. 8 shows only main components of the terminal device. As shown in FIG. 8, the terminal device 800 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and the data. A radio frequency circuit is mainly configured to perform conversion between a baseband signal and a radio frequency signal, and process the radio frequency signal. The antenna is mainly configured to receive and send the radio frequency signal in a form of an electromagnetic wave. The input/output apparatus, for example, a touchscreen, a display screen, or a keyboard, is mainly configured to receive data entered by a user and output data to the user.

After the terminal device is powered on, the processor may read the software program in a storage unit, explain and execute instructions of the software program, and process the data of the software program. When data needs to be sent in a wireless manner, after performing baseband processing on the to-be-sent data, the processor outputs a baseband signal to the radio frequency circuit. After performing radio frequency processing on the baseband signal, the radio frequency circuit sends a radio frequency signal through the antenna in the form of the electromagnetic wave. When data is sent to the terminal, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 8 shows only one memory and one processor. An actual terminal may include a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data, and the central processing unit is mainly configured to: control the entire terminal, execute the software program, and process the data of the software program. The processor in FIG. 8 integrates functions of the baseband processor and the central processing unit. A person skilled in the art may understand that the baseband processor and the central processing unit may be processors independent of each other, and are interconnected by using a technology, for example, a bus. A person skilled in the art may understand that the terminal device may include a plurality of baseband processors to adapt to different network standards, the terminal device may include a plurality of central processing units to improve a processing capability of the terminal device, and the components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of software program. The processor executes the software program to implement a baseband processing function.

In an example, the antenna and the control circuit that have a transceiver function may be considered as a transceiver module 801 of the terminal device 800, and the processor having a processing function may be considered as a processing module 802 of the terminal device 800. As shown in FIG. 8, the terminal device 800 includes the transceiver module 801 and the processing module 802. The transceiver module may also be referred to as a transceiver, a transceiver, a transceiver apparatus, or the like. Optionally, a component that is configured to implement a receiving function and that is in the transceiver module 801 may be considered as a receiving module, and a component that is configured to implement a sending function and that is in the transceiver module 801 may be considered as a sending module. That is, the transceiver module 801 includes the receiving module and the sending module. For example, the receiving module may also be referred to as a receiver, a receiver, a receiver circuit, or the like, and the sending module may be referred to as a transmitter, a transmitter, a transmitter circuit, or the like.

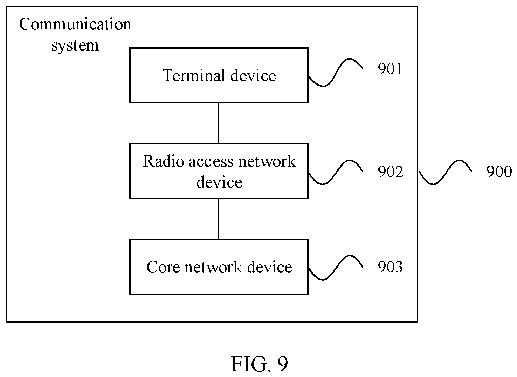

FIG. 9 is a schematic diagram of a structure of a communication system according to an embodiment of this application. As shown in FIG. 9, the communication system 900 in this embodiment may include a terminal device 901, a radio access network device 902, and a core network device 903. There may be one or more terminal devices 901. The terminal device 901 may use the structure in the apparatus embodiment shown in FIG. 4, FIG. 7, or FIG. 8, and correspondingly, may perform the technical solution related to the terminal device in any one of the foregoing method embodiments. Implementation principles and technical effects are similar, and details are not described herein again. The radio access network device 902 may use the structure in the apparatus embodiment shown in FIG. 6 or FIG. 7, and correspondingly, may perform the technical solution related to the radio access network device in any one of the foregoing method embodiments. Implementation principles and technical effects are similar, and details are not described herein again. The core network device 903 may use the structure in the apparatus embodiment shown in FIG. 5 or FIG. 7, and correspondingly, may perform the technical solution related to the core network device in any one of the foregoing method embodiments. Implementation principles and technical effects are similar, and details are not described herein again.

It should be noted that, in the embodiments of this application, division into the modules is an example, and is merely division into logical functions. In an actual implementation, another division manner may be used. Function modules in the embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software function module and sold or used as an independent product, the integrated module may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, that integrates one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

## Claims

1. A communication method, comprising:
receiving (S302), by a terminal device, first information from a core network device, wherein the first information is used to indicate the terminal device whether to use a power-saving paging discontinuous reception cycle; and
determining (S303), by the terminal device, a paging discontinuous reception cycle of the terminal device based on the first information;
wherein the determining (S303), by the terminal device, a paging discontinuous reception cycle of the terminal device based on the first information comprises:
determining, by the terminal device when the first information indicates the terminal device to use the power-saving paging discontinuous reception cycle, that the paging discontinuous reception cycle is the power-saving paging discontinuous reception cycle, wherein the power-saving paging discontinuous reception cycle is a longest cycle in a plurality of preset paging cycles of the terminal device; and
determining, by the terminal device when the first information indicates the terminal device not to use the power-saving paging discontinuous reception cycle, that the paging discontinuous reception cycle is a shortest cycle in the plurality of preset paging cycles of the terminal device.

2. The method according to claim 1, wherein the plurality of preset paging cycles comprise a default paging cycle obtained by the terminal device from a broadcast message, and the terminal device-specific paging cycle obtained by the terminal device from the non-access stratum NAS message.

3. The method according to claim 2, wherein the plurality of preset paging cycles further comprise a paging discontinuous reception cycle that is obtained by the terminal device from a radio access control RRC message and that is used for radio access network RAN paging.

4. The method according to any one of claims 1 to 3, wherein before the receiving (S302), by a terminal device, first information from a core network device, the method further comprises:
sending (S300), by the terminal device, second information to the core network device, wherein the second information is used to indicate whether the terminal device recommends using the power-saving paging discontinuous reception cycle.

5. The method according to any one of claims 1 to 4, further comprising:
receiving (S307), by the terminal device based on the determined paging discontinuous reception cycle, a paging message sent by a radio access network device.

6. A terminal device (400), comprising:
a transceiver module (401), configured to receive first information from a core network device, wherein the first information is used to indicate the terminal device (400) whether to use a power-saving paging discontinuous reception cycle; and
a processing module (402), configured to determine a paging discontinuous reception cycle of the terminal device (400) based on the first information;
wherein the processing module is further configured to determine, when the first information indicates the terminal device to use the power-saving paging discontinuous reception cycle, that the paging discontinuous reception cycle is the power-saving paging discontinuous reception cycle, wherein the power-saving paging discontinuous reception cycle is a longest cycle in a plurality of preset paging cycles of the terminal device (400); and
wherein the processing module is further configured to determine, when the first information indicates the terminal device not to use the power-saving paging discontinuous reception cycle, that the paging discontinuous reception cycle is a shortest cycle in the plurality of preset paging cycles of the terminal device.

7. The terminal device (400) according to claim 6, wherein the plurality of preset paging cycles comprise a default paging cycle that is obtained from a broadcast message received by the transceiver module (401), and the terminal device-specific paging cycle that is obtained from the non-access stratum, NAS, message received by the transceiver module (401).

8. The terminal device (400) according to claim 7, wherein the plurality of preset paging cycles further comprise a paging discontinuous reception cycle that is obtained from a radio access control, RRC, message received by the transceiver module (402) and that is used for radio access network, RAN, paging.

9. A radio access network device (600), comprising:
a transceiver module (601), configured to receive third information sent by a core network device, wherein the third information is used to indicate whether a terminal device is to use a power-saving paging discontinuous reception cycle; and
a processing module (602), configured to determine a paging discontinuous reception cycle of the terminal device based on the third information;
wherein the processing module is further configured to determine, when the first information indicates the terminal device to use the power-saving paging discontinuous reception cycle, that the paging discontinuous reception cycle is the power-saving paging discontinuous reception cycle, wherein the power-saving paging discontinuous reception cycle is a longest cycle in a plurality of preset paging cycles of the terminal device; and
wherein the processing module is further configured to determine, when the first information indicates the terminal device not to use the power-saving paging discontinuous reception cycle, that the paging discontinuous reception cycle is a shortest cycle in the plurality of preset paging cycles of the terminal device.

10. The radio access network device (600) according to claim 9, wherein the plurality of preset paging cycles comprise a default paging cycle obtained by the terminal device from a broadcast message, and the terminal device-specific paging cycle obtained by the terminal device from the non-access stratum, NAS, message.

11. The radio access network device (600) according to claim 10, wherein the plurality of preset paging cycles further comprise a paging discontinuous reception cycle that is obtained by the terminal device from a radio access control, RRC, message and that is used for radio access network, RAN, paging.

## Patentansprüche

1. Kommunikationsverfahren, das umfasst:
Empfangen (S302), durch ein Endgerät, erster Informationen von einer Kernnetzwerkvorrichtung, wobei die ersten Informationen verwendet werden, um dem Endgerät anzuzeigen, ob ein energiesparender diskontinuierlicher Paging-Empfangszyklus verwendet werden soll; und
Bestimmen (S303), durch das Endgerät, eines diskontinuierlichen Paging-Empfangszyklus des Endgeräts basierend auf den ersten Informationen;
wobei das Bestimmen (S303), durch das Endgerät, eines diskontinuierlichen Paging-Empfangszyklus des Endgeräts basierend auf den ersten Informationen umfasst:
Bestimmen, durch das Endgerät, wenn die ersten Informationen dem Endgerät anzeigen, den energiesparenden diskontinuierlichen Paging-Empfangszyklus zu verwenden, dass der diskontinuierliche Paging-Empfangszyklus der energiesparende diskontinuierliche Paging-Empfangszyklus ist, wobei der energiesparende diskontinuierliche Paging-Empfangszyklus ein längster Zyklus in einer Vielzahl von voreingestellten Paging-Zyklen des Endgeräts ist; und
Bestimmen, durch das Endgerät, wenn die ersten Informationen dem Endgerät anzeigen, den energiesparenden diskontinuierlichen Paging-Empfangszyklus nicht zu verwenden, dass der diskontinuierliche Paging-Empfangszyklus ein kürzester Zyklus in der Vielzahl von voreingestellten Paging-Zyklen des Endgeräts ist.

2. Verfahren nach Anspruch 1, wobei die Vielzahl von voreingestellten Paging-Zyklen einen Standard-Paging-Zyklus, der durch das Endgerät von einer Broadcast-Nachricht erhalten wird, und den endgerätspezifischen Paging-Zyklus, der durch das Endgerät von der Non-Access-Stratum(NAS)-Nachricht erhalten wird, umfasst.

3. Verfahren nach Anspruch 2, wobei die Vielzahl von voreingestellten Paging-Zyklen ferner einen diskontinuierlichen Paging-Empfangszyklus, der durch das Endgerät von einer Funkzugangssteuerungs(RRC)-Nachricht erhalten wird und der für ein Funkzugangsnetzwerk(RAN)-Paging verwendet wird, umfasst.

4. Verfahren nach einem der Ansprüche 1 bis 3, wobei vor dem Empfangen (S302), durch ein Endgerät, erster Informationen von einer Kernnetzwerkvorrichtung, das Verfahren ferner umfasst:
Senden (S300), durch das Endgerät, zweiter Informationen an die Kernnetzwerkvorrichtung, wobei die zweiten Informationen verwendet werden, um anzuzeigen, ob das Endgerät die Verwendung des energiesparenden diskontinuierlichen Paging-Empfangszyklus empfiehlt.

5. Verfahren nach einem der Ansprüche 1 bis 4, das ferner umfasst:
Empfangen (S307), durch das Endgerät basierend auf dem bestimmten diskontinuierlichen Paging-Empfangszyklus, einer Paging-Nachricht, die durch eine Funkzugangsnetzwerkvorrichtung gesendet wird.

6. Endgerät (400), das umfasst:
ein Transceivermodul (401), das konfiguriert ist, um erste Informationen von einer Kernnetzwerkvorrichtung zu empfangen, wobei die ersten Informationen verwendet werden, um dem Endgerät (400) anzuzeigen, ob ein energiesparender diskontinuierlicher Paging-Empfangszyklus verwendet werden soll; und
ein Verarbeitungsmodul (402), das konfiguriert ist, um einen diskontinuierlichen Paging-Empfangszyklus des Endgeräts (400) basierend auf den ersten Informationen zu bestimmen;
wobei das Verarbeitungsmodul ferner konfiguriert ist, um zu bestimmen, wenn die ersten Informationen dem Endgerät anzeigen, den energiesparenden diskontinuierlichen Paging-Empfangszyklus zu verwenden, dass der diskontinuierliche Paging-Empfangszyklus der energiesparende diskontinuierliche Paging-Empfangszyklus ist, wobei der energiesparende diskontinuierliche Paging-Empfangszyklus ein längster Zyklus in einer Vielzahl von voreingestellten Paging-Zyklen des Endgeräts (400) ist; und
wobei das Verarbeitungsmodul ferner konfiguriert ist, um zu bestimmen, wenn die ersten Informationen dem Endgerät anzeigen, den energiesparenden diskontinuierlichen Paging-Empfangszyklus nicht zu verwenden, dass der diskontinuierliche Paging-Empfangszyklus ein kürzester Zyklus in der Vielzahl von voreingestellten Paging-Zyklen des Endgeräts ist.

7. Endgerät (400) nach Anspruch 6, wobei die Vielzahl von voreingestellten Paging-Zyklen einen Standard-Paging-Zyklus, der von einer Broadcast-Nachricht, die durch das Transceivermodul (401) empfangen wird, erhalten wird, und den endgerätspezifischen Paging-Zyklus, der von der Non-Access-Stratum(NAS)-Nachricht, die durch das Transceivermodul (401) empfangen wird, erhalten wird, umfasst.

8. Endgerät (400) nach Anspruch 7, wobei die Vielzahl von voreingestellten Paging-Zyklen ferner einen diskontinuierlichen Paging-Empfangszyklus, der von einer Funkzugangssteuerungs(RRC)-Nachricht, die durch das Transceivermodul (402) empfangen wird, erhalten wird, und der für ein Funkzugangsnetzwerk(RAN)-Paging verwendet wird, umfasst.

9. Funkzugangsnetzwerkvorrichtung (600), die umfasst:
ein Transceivermodul (601), das konfiguriert ist, um dritte Informationen, die durch eine Kernnetzwerkvorrichtung gesendet werden, zu empfangen, wobei die dritten Informationen verwendet werden, um anzuzeigen, ob ein Endgerät einen energiesparenden diskontinuierlichen Paging-Empfangszyklus verwenden soll; und
ein Verarbeitungsmodul (602), das konfiguriert ist, um einen diskontinuierlichen Paging-Empfangszyklus des Endgeräts basierend auf den dritten Informationen zu bestimmen;
wobei das Verarbeitungsmodul ferner konfiguriert ist, um zu bestimmen, wenn die ersten Informationen dem Endgerät anzeigen, den energiesparenden diskontinuierlichen Paging-Empfangszyklus zu verwenden, dass der diskontinuierliche Paging-Empfangszyklus der energiesparende diskontinuierliche Paging-Empfangszyklus ist, wobei der energiesparende diskontinuierliche Paging-Empfangszyklus ein längster Zyklus in einer Vielzahl von voreingestellten Paging-Zyklen des Endgeräts ist; und
wobei das Verarbeitungsmodul ferner konfiguriert ist, um zu bestimmen, wenn die ersten Informationen dem Endgerät anzeigen, den energiesparenden diskontinuierlichen Paging-Empfangszyklus nicht zu verwenden, dass der diskontinuierliche Paging-Empfangszyklus ein kürzester Zyklus in der Vielzahl von voreingestellten Paging-Zyklen des Endgeräts ist.

10. Funkzugangsnetzwerkvorrichtung (600) nach Anspruch 9, wobei die Vielzahl von voreingestellten Paging-Zyklen einen Standard-Paging-Zyklus, der durch das Endgerät von einer Broadcast-Nachricht erhalten wird, und den endgerätspezifischen Paging-Zyklus, der durch das Endgerät von der Non-Access-Stratum(NAS)-Nachricht erhalten wird, umfasst.

11. Funkzugangsnetzwerkvorrichtung (600) nach Anspruch 10, wobei die Vielzahl von voreingestellten Paging-Zyklen ferner einen diskontinuierlichen Paging-Empfangszyklus, der durch das Endgerät von einer Funkzugangssteuerungs(RRC)-Nachricht erhalten wird und der für das Funkzugangsnetzwerk(RAN)-Paging verwendet wird, umfasst.

## Revendications

1. Procédé de communication, comprenant :
la réception (S302), par un dispositif terminal, de premières informations en provenance d'un dispositif de réseau central, dans lequel les premières informations sont utilisées pour indiquer au dispositif terminal s'il doit utiliser un cycle de réception discontinue de radiomessagerie à économie d'énergie ; et
la détermination (S303), par le dispositif terminal, d'un cycle de réception discontinue de radiomessagerie du dispositif terminal sur la base des premières informations ;
dans lequel la détermination (S303), par le dispositif terminal, d'un cycle de réception discontinue de radiomessagerie du dispositif terminal sur la base des premières informations comprend :
le fait de déterminer, par le dispositif terminal, lorsque les premières informations indiquent que le dispositif terminal utilise le cycle de réception discontinue de radiomessagerie à économie d'énergie, que le cycle de réception discontinue de radiomessagerie est le cycle de réception discontinue de radiomessagerie à économie d'énergie, dans lequel le cycle de réception discontinue de radiomessagerie à économie d'énergie est un cycle le plus long dans une pluralité de cycles de radiomessagerie prédéfinis du dispositif terminal ; et
le fait de déterminer, par le dispositif terminal, lorsque les premières informations indiquent que le dispositif terminal n'utilise pas le cycle de réception discontinue de radiomessagerie à économie d'énergie, que le cycle de réception discontinue de radiomessagerie est un cycle le plus court dans la pluralité de cycles de radiomessagerie prédéfinis du dispositif terminal.

2. Procédé selon la revendication 1, dans lequel la pluralité de cycles de radiomessagerie prédéfinis comprend un cycle de radiomessagerie par défaut obtenu par le dispositif terminal à partir d'un message de diffusion, et le cycle de radiomessagerie spécifique au dispositif terminal obtenu par le dispositif terminal à partir d'un message de strate de non-accès NAS.

3. Procédé selon la revendication 2, dans lequel la pluralité de cycles de radiomessagerie prédéfinis comprend en outre un cycle de réception discontinue de radiomessagerie qui est obtenu par le dispositif terminal à partir d'un message de commande d'accès radio RRC et qui est utilisé pour une radiomessagerie de réseau d'accès radio RAN.

4. Procédé selon l'une quelconque des revendications 1 à 3, dans lequel, avant la réception (S302), par un dispositif terminal, de premières informations à partir du dispositif de réseau central, le procédé comprend en outre :
l'envoi (S300), par le dispositif terminal, de deuxièmes informations au dispositif de réseau central, dans lequel les deuxièmes informations sont utilisées pour indiquer si le dispositif terminal recommande d'utiliser le cycle de réception discontinue de radiomessagerie à économie d'énergie.

5. Procédé selon l'une quelconque des revendications 1 à 4, comprenant en outre :
la réception (S307), par le dispositif terminal, sur la base du cycle de réception discontinue de radiomessagerie déterminé, d'un message de radiomessagerie envoyé par un dispositif de réseau d'accès radio.

6. Dispositif terminal (400), comprenant :
un module émetteur-récepteur (401), configuré pour recevoir des premières informations en provenance d'un dispositif de réseau central, dans lequel les premières informations sont utilisées pour indiquer au dispositif terminal (400) s'il doit utiliser un cycle de réception discontinue de radiomessagerie à économie d'énergie ; et
un module de traitement (402), configuré pour déterminer un cycle de réception discontinue de radiomessagerie du dispositif terminal (400) sur la base des premières informations ;
dans lequel le module de traitement est en outre configuré pour déterminer, lorsque les premières informations indiquent que le dispositif terminal utilise le cycle de réception discontinue de radiomessagerie à économie d'énergie, que le cycle de réception discontinue de radiomessagerie est le cycle de réception discontinue de radiomessagerie à économie d'énergie, dans lequel le cycle de réception discontinue de radiomessagerie à économie d'énergie est un cycle le plus long dans une pluralité de cycles de radiomessagerie prédéfinis du dispositif terminal (400) ; et
dans lequel le module de traitement est en outre configuré pour déterminer, lorsque les premières informations indiquent que le dispositif terminal n'utilise pas le cycle de réception discontinue de radiomessagerie à économie d'énergie, que le cycle de réception discontinue de radiomessagerie est un cycle le plus court dans la pluralité de cycles de radiomessagerie prédéfinis du dispositif terminal.

7. Dispositif terminal (400) selon la revendication 6, dans lequel la pluralité de cycles de radiomessagerie prédéfinis comprend un cycle de radiomessagerie par défaut qui est obtenu à partir d'un message de diffusion reçu par le module émetteur-récepteur (401), et le cycle de radiomessagerie spécifique au dispositif terminal qui est obtenu à partir du message de strate de non-accès, NAS, reçu par le module émetteur-récepteur (401).

8. Dispositif terminal (400) selon la revendication 7, dans lequel la pluralité de cycles de radiomessagerie prédéfinis comprend en outre un cycle de réception discontinue de radiomessagerie qui est obtenu à partir d'un message de commande d'accès radio, RRC, reçu par le module émetteur-récepteur (402) et qui est utilisé pour une radiomessagerie de réseau d'accès radio, RAN.

9. Dispositif de réseau d'accès radio (600), comprenant :
un module émetteur-récepteur (601), configuré pour recevoir des troisièmes informations envoyées par un dispositif de réseau central, dans lequel les troisièmes informations sont utilisées pour indiquer si un dispositif terminal doit utiliser un cycle de réception discontinue de radiomessagerie à économie d'énergie ; et
un module de traitement (602), configuré pour déterminer un cycle de réception discontinue de radiomessagerie du dispositif terminal sur la base des troisièmes informations ;
dans lequel le module de traitement est en outre configuré pour déterminer, lorsque les premières informations indiquent que le dispositif terminal utilise le cycle de réception discontinue de radiomessagerie à économie d'énergie, que le cycle de réception discontinue de radiomessagerie est le cycle de réception discontinue de radiomessagerie à économie d'énergie, dans lequel le cycle de réception discontinue de radiomessagerie à économie d'énergie est un cycle le plus long dans une pluralité de cycles de radiomessagerie prédéfinis du dispositif terminal ; et
dans lequel le module de traitement est en outre configuré pour déterminer, lorsque les premières informations indiquent que le dispositif terminal n'utilise pas le cycle de réception discontinue de radiomessagerie à économie d'énergie, que le cycle de réception discontinue de radiomessagerie est un cycle le plus court dans la pluralité de cycles de radiomessagerie prédéfinis du dispositif terminal.

10. Dispositif de réseau d'accès radio (600) selon la revendication 9, dans lequel la pluralité de cycles de radiomessagerie prédéfinis comprend un cycle de radiomessagerie par défaut obtenu par le dispositif terminal à partir d'un message de diffusion, et le cycle de radiomessagerie spécifique au dispositif terminal obtenu par le dispositif terminal à partir du message de strate de non-accès, NAS.

11. Dispositif de réseau d'accès radio (600) selon la revendication 10, dans lequel la pluralité de cycles de radiomessagerie prédéfinis comprend en outre un cycle de réception discontinue de radiomessagerie qui est obtenu par le dispositif terminal à partir d'un message de commande d'accès radio, RRC, et qui est utilisé pour une radiomessagerie de réseau d'accès radio, RAN.
